# FASCICULE DE BREVET EUROPEEN

(11) **EP 0 876 872 B1**
(45) Date de publication et mention de la délivrance du brevet: **23.07.2003**
(21) Numéro de dépôt: 98400954.8
(22) Date de dépôt: 17.04.1998
(51) Int. Cl.: B23P 19/02, B25B 27/02

(54) **Dispositif d'extraction de tubes d'échangeurs thermiques à faisceaux de tubes et doubles plaques**
Vorrichtung zum Herausziehen von Rohren bei Wärmetauschern mit Rohrbündeln und doppelten Platten
Device for the extraction of the tubes of heat exchangers with tube bundles and double plates

(30) Priorité: 21.04.1997 FR 9704883
(43) Date de publication de la demande: 11.11.1998
(73) Titulaire: Sarl Munch, 54390 Frouard (FR)
(72) Inventeur: Zimmermann, Christian, 88390 Darnieulles - Girancourt (FR)
(74) Mandataire: Bérogin, Francis

(56) Documents cités:
- EP-A- 0 163 088
- EP-A- 0 168 698
- FR-A- 2 445 198
- US-A- 2 697 872
- US-A- 4 077 102
- US-A- 4 679 315
- US-A- 4 959 899
- DATABASE WPI Section PQ, Week 8846 Derwent Publications Ltd., London, GB; Class P56, AN 88-329265 XP002051536 & SU 1 395 449 A (KAUNASENERGOREMONT) , 15 mai 1988
- DATABASE WPI Section PQ, Week 8751 Derwent Publications Ltd., London, GB; Class P56, AN 87-361255 XP002051537 & SU 1 310 162 A (KAUNASENERGOREMONT) , 15 mai 1987

## Description

L'invention concerne un dispositif d'extraction de tubes d'un échangeur thermique à faisceaux de tubes, dont chacun est inséré, à chacune de ses deux parties d'extrémité axiale, par un double dudgeonnage dans une double plaque, constituée d'une plaque externe et d'une plaque interne espacées l'une de l'autre, à une extrémité correspondante, selon le préambule de la revendication 1, comme il est connu par exemple du document SU-A-1 395 449.

L'invention se rapporte en particulier à un dispositif d'extraction des tubes de faisceaux de tubes de condenseurs, dans lesquels les tubes sont parcourus par un fluide caloporteur, tel que de l'eau, douce ou de mer, afin de condenser de la vapeur circulant autour des tubes et sensiblement perpendiculairement aux tubes en faisceaux, l'étanchéité de chaque tube à son entrée comme à sa sortie de l'échangeur étant assurée par un double dudgeonnage de sa partie d'extrémité axiale correspondante dans une double plaque alvéolée d'entrée ou de sortie, chaque double plaque comportant une plaque externe et une plaque interne, par rapport au centre de l'échangeur, qui sont espacées l'une de l'autre selon l'axe du tube, et entre lesquelles est entretenu un courant d'eau de récupération des fuites éventuelles au niveau du dudgeonnage externe, dans la plaque externe de la double plaque correspondante.

Pour extraire des tubes à double dudgeonnage de faisceaux d'échangeurs à doubles plaques, du type précité, l'utilisation de machines connues d'extraction de tubes fixés par un simple dudgeonnage dans la plaque d'entrée et dans la plaque de sortie de l'échangeur s'est avérée inefficace, voire dommageable.

En effet, si une machine connue d'extraction d'un tube à simple dudgeonnage est utilisée pour l'arrachement d'un tube à double dudgeonnage au niveau du dudgeonnage externe, retenant le tube dans une plaque externe, à l'entrée ou à la sortie de l'échangeur, il se produit une rupture du tube entre les deux plaques externe et interne de la double plaque correspondante, alors que si l'arrachement du tube est effectué à l'aide de la machine connue au niveau du dudgeonnage interne, fixant ce tube dans la plaque interne de la double plaque correspondante, il se forme un bourrelet ou un bombement du tube, entre les deux plaques, ce qui rend impossible de sortir la partie d'extrémité correspondante du tube par la plaque externe, et peut conduire à l'endommagement de cette plaque externe, en particulier lorsqu'elle n'est pas en acier mais en un alliage fragile, par exemple du type cupro-aluminium.

Le problème à la base de l'invention est de proposer un dispositif d'extraction spécifique aux tubes à double dudgeonnage de fixation étanche de chaque partie d'extrémité axiale d'un tube dans une double plaque d'extrémité de l'échangeur.

Un but de l'invention est donc de proposer un dispositif permettant l'extraction des tubes d'échangeur dudgeonnés dans des doubles plaques tubulaires sans occasionner de dommages aux plaques et sans risque de rupture des tubes dans l'espace entre la plaque interne et la plaque externe d'une double plaque.

A cet effet, le dispositif d'extraction selon l'invention comprend les caractéristiques de la revendication 1.

Grâce au dispositif de l'invention, le fait d'exercer une extraction sur les deux dudgeonnages en même temps a pour conséquence que le tube, généralement très usé lorsqu'on veut l'extraire pour le remplacer, ne casse pas entre les deux plaques, ce qui se produit, comme déjà mentionné ci-dessus, si on tire uniquement le dudgeonnage externe (inséré dans la plaque externe) et rend ensuite son extraction impossible.

En outre, la diminution de la pression et de l'effort d'expansion, dès après le début de la course d'extraction du tube, a pour avantage qu'il ne se produit aucun bombement ni autre déformation en expansion du tube, lorsque le dudgeonnage interne (initialement inséré dans la plaque interne) se trouve dans l'espace entre les deux plaques, et le dudgeonnage interne peut ensuite passer facilement au travers de la plaque externe, sans entraîner de déformation de la géométrie de l'alvéole de la double plaque qui reçoit ce tube, même lorsque l'une au moins des deux plaques est en un alliage fragile du type cupro-aluminium.

Avantageusement, le piston et la tige d'expansion de l'étage d'expansion du vérin coulissent avec étanchéité respectivement dans le piston et la tige d'extraction, qui coulissent à leur tour avec étanchéité respectivement dans le corps de vérin et en traversant un palier de fermeture de l'extrémité du corps de vérin du côté de la butée d'appui sur la plaque externe.

Les deux étages du vérin peuvent être alimentés simultanément à la même pression hydraulique, et les pistons d'expansion et d'extraction peuvent présenter des surfaces efficaces telles que le piston d'expansion commence sa course dans le corps de vérin avant le piston d'extraction, et qu'après le début de la course du piston d'extraction dans le corps de vérin, la pression hydraulique d'alimentation commune aux deux étages du vérin diminue. Ainsi, la pression hydraulique commune aux deux étages du vérin télescopique s'adapte automatiquement à la résistance opposée pour permettre, en une seule opération, d'exercer une extraction simultanément sur les deux dudgeonnages, après expansion de chaque griffe pour son incrustation dans les deux dudgeonnages, puis pour diminuer de manière importante, et faire diminuer l'effort de traction après le début du mouvement d'extraction qui provoque l'arrachement du tube par rapport aux deux plaques, dans des conditions qui empêchent la rupture du tube dans l'espace entre les deux plaques et sa déformation en expansion, afin d'assurer, comme mentionné ci-dessus, le passage du dudgeonnage interne dans l'alvéole correspondant de la plaque externe et sans endommager cette dernière.

Avantageusement de plus, le dispositif de l'invention peut présenter une ou plusieurs des caractéristiques additionnelles suivantes :
le piston d'expansion est alimenté en pression hydraulique par au moins un canal sensiblement radial dans le piston d'extraction, entre une gorge périphérique délimitant une première surface annulaire sur le piston d'extraction, et un jeu radial entre les deux tiges et en communication avec une chambre délimitée entre les deux pistons, le piston d'extraction présentant également une seconde surface annulaire séparée par une nervure annulaire de la première surface annulaire, et soumise à la pression hydraulique d'extraction du tube après le début de la course d'extraction du piston d'extraction sous l'effet de la pression hydraulique appliquée à la première surface annulaire,
   - le vérin comporte une chambre de contre-pression, délimitée entre les deux pistons et l'extrémité fermée du corps de vérin du côté opposé à ladite butée d'appui, ladite chambre de contre-pression étant maintenue en permanence à une contre-pression pneumatique de rappel des pistons, qui est inférieure à la pression hydraulique d'alimentation du vérin,
   - le dispositif comprend plusieurs griffes disposées autour d'un tirant axial, chaque griffe comportant deux séries de dents décalées axialement sur sa face externe et deux surfaces d'appui inclinées sur sa face interne, de sorte que les griffes sont écartées sensiblement radialement les unes des autres sous la poussée axiale de deux cônes d'expansion à surfaces externes inclinées, de préférence sensiblement tronconiques dans le même sens, contre les deux surfaces d'appui des griffes, les deux cônes d'expansion étant portés par le tirant axial fixé par une extrémité à l'extrémité de la tige d'expansion du côté opposé au piston d'expansion,
   - les deux cônes d'expansion sont séparés l'un de l'autre par une distance réglable axialement, de préférence par vissage du cône d'expansion le plus éloigné de la tige d'expansion sur une partie d'extrémité filetée du tirant,
   - les griffes sont entraînées dans le sens de l'extraction du tube par un écrou qui est vissé sur la partie d'extrémité de la tige d'extraction qui fait saillie à l'extérieur du corps de vérin,
   - les griffes présentent un épaulement radial externe entraîné dans le sens de l'extraction du tube par le fond de l'écrou ayant une section longitudinale en U,
   - la liaison entre le tirant et la tige d'expansion est disposée à l'intérieur d'une entretoise tubulaire s'étendant entre l'extrémité de la tige d'extraction qui est reliée aux griffes, et ces dernières, pour servir d'appui aux griffes et empêcher leur recul lors de leur expansion, et
   - la butée d'appui du corps de vérin contre la plaque externe comprend une partie cylindrique fixée par une extrémité sur le palier, du côté opposé au corps de vérin, et prolongée à son autre extrémité par un embout de forme générale externe tronconique pour l'appui autour d'un alvéole de ladite plaque externe et logeant le tube à extraire.

D'autres caractéristiques et avantages de l'invention découleront de la description donnée ci-dessous, à titre non limitatif, d'un exemple de réalisation décrit en référence aux dessins annexés sur lesquels :
- les figures 1 et 2 sont respectivement une demi-vue gauche et une demi-vue droite, sensiblement complémentaires (avec un léger chevauchement pour leur mise bout-à-bout) en partie en coupe axiale et en partie en élévation latérale, d'un dispositif d'extraction mis en place pour l'extraction d'un tube retenu par un double dudgeonnage dans une double plaque d'extrémité d'un échangeur,
- la figure 3 est une vue à plus grande échelle d'une partie de la figure 1 représentant les griffes entourant le tirant axial et ses deux cônes d'expansion des griffes,
- la figure 4 est une vue en coupe axiale et à échelle différente des griffes du dispositif, et
- la figure 5 est une vue partiellement en élévation latérale et partiellement en coupe axiale du tirant central avec un cône d'expansion et du second cône d'expansion qui se fixe sur l'extrémité du tirant.

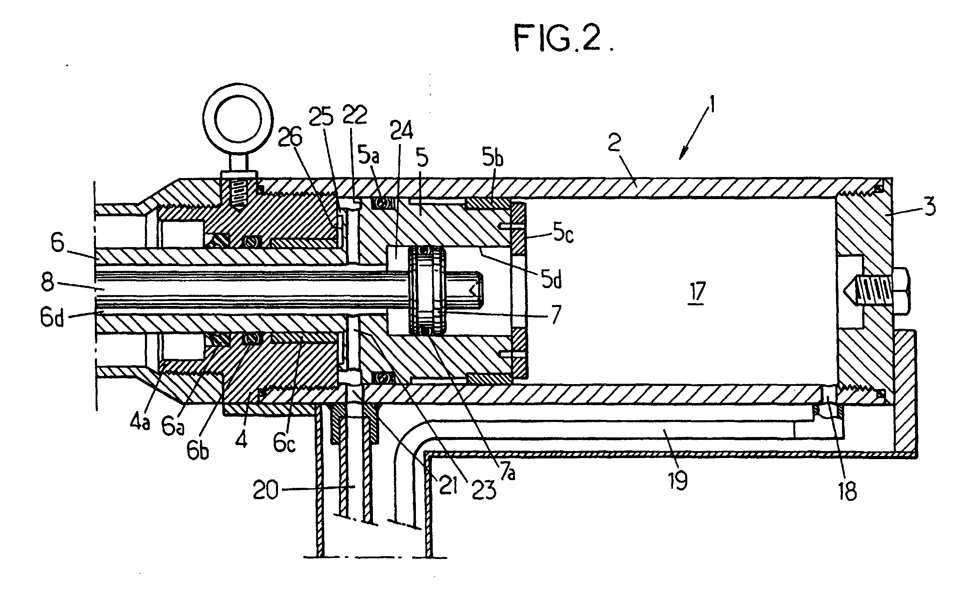

Le dispositif comprend un vérin hydraulique télescopique à deux étages 1, dont la structure est essentiellement la suivante. Ce vérin 1 comprend un corps cylindrique 2 (voir figure 2) fermé à son extrémité arrière (sur la droite de la figure 2) par un fond 3 vissé dans le corps 2, dans l'autre extrémité duquel est vissé un palier 4.

Un piston d'extraction 5 est monté coulissant avec étanchéité dans le corps 2 à l'aide d'un joint d'étanchéité torique 5a, logé dans une gorge périphérique du piston 5, et d'une bague en bronze 5b, retenue contre un épaulement et autour de la partie d'extrémité libre du piston 5 par une rondelle 5c constituant une fin de course d'expansion et vissée dans l'extrémité du piston 5, qui est tubulaire pour les raisons mentionnées ci-dessous.

Du côté du palier 4, le piston 5 est prolongé par une tige d'extraction 6, d'une seule pièce avec le piston 5 et également tubulaire, et dont le passage central et axial 6d débouche dans l'alésage axial 5d du piston 5. La tige 6 traverse le palier 4 dans lequel elle est montée coulissante avec étanchéité à l'aide d'un joint d'étanchéité à lèvre 6a, d'un joint d'étanchéité torique 6b et d'une bague anti-frottement 6c montés dans des gorges internes du palier 4.

Le piston 5 et la tige 6 d'extraction forment, avec le corps de vérin 2, un étage de vérin d'extraction pour les raisons indiquées ci-dessous.

Un second piston 7, ou piston d'expansion, est monté coulissant avec étanchéité dans l'alésage axial 5d du piston 5 à l'aide d'un joint d'étanchéité torique 7a dans une gorge périphérique du piston 7, lequel est solidaire d'une partie d'extrémité d'une tige d'expansion 8 s'étendant axialement, avec du jeu radial, dans le passage central 6d de la tige 6 et traversant l'extrémité de cette tige 6, du côté opposé au piston 5, en étant montée coulissante avec étanchéité dans cette extrémité de tige 6e à l'aide d'un joint d'étanchéité à lèvre 8a, d'un joint d'étanchéité torique 8b et d'une bague anti-frottement 8c retenus dans des gorges internes de cette extrémité de tige 6e.

Le piston 7 et la tige 8 d'expansion forment avec le piston 5 et la tige 6 d'extraction, dans lesquels ils coulissent respectivement avec étanchéité, un autre étage de vérin dit étage d'expansion, pour les raisons indiquées ci-dessous.

L'extrémité 8d de la tige 8, du côté opposé au piston 7, et en saillie à l'extérieur de la tige tubulaire 6, est filetée et fixée par vissage dans un alésage taraudé d'un manchon d'extrémité 9a d'un tirant axial et central 9, également représenté sur la figure 5. Dans sa partie centrale, le tirant 9 est d'une seule pièce avec un premier cône d'expansion 9b, en saillie radiale et dont la majeure partie de la surface externe est tronconique convergeant vers le manchon d'extrémité 9a. L'extrémité du tirant 9 du côté opposé au manchon 9a est une extrémité filetée 9c sur laquelle se fixe par vissage, et en position réglable axialement, un second cône d'expansion 9d présentant également une surface tronconique convergeant dans le même sens que celle du premier cône 9b, le second cône 9d étant tubulaire et ayant son alésage central taraudé, pour coopérer avec l'extrémité filetée 9c du tirant 9, et se terminant par un embout à deux plats de manoeuvre 9e, pour faciliter le montage sur le tirant 9 à l'aide d'un outil.

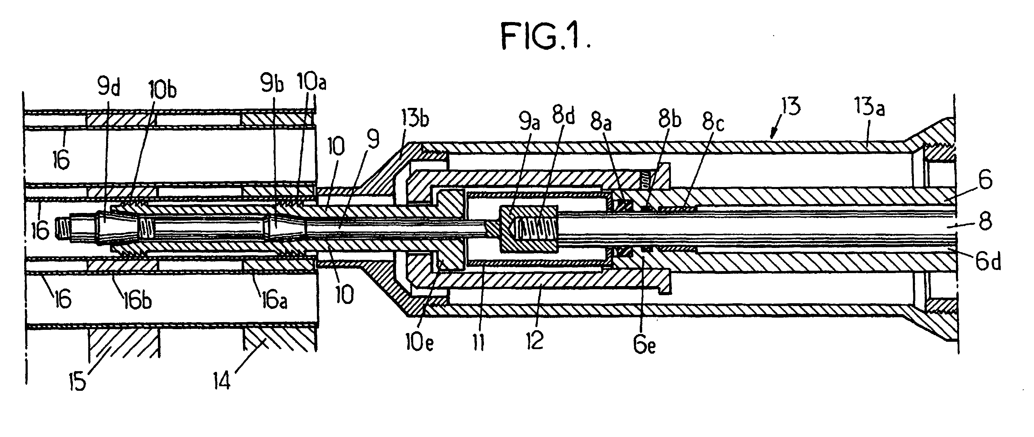

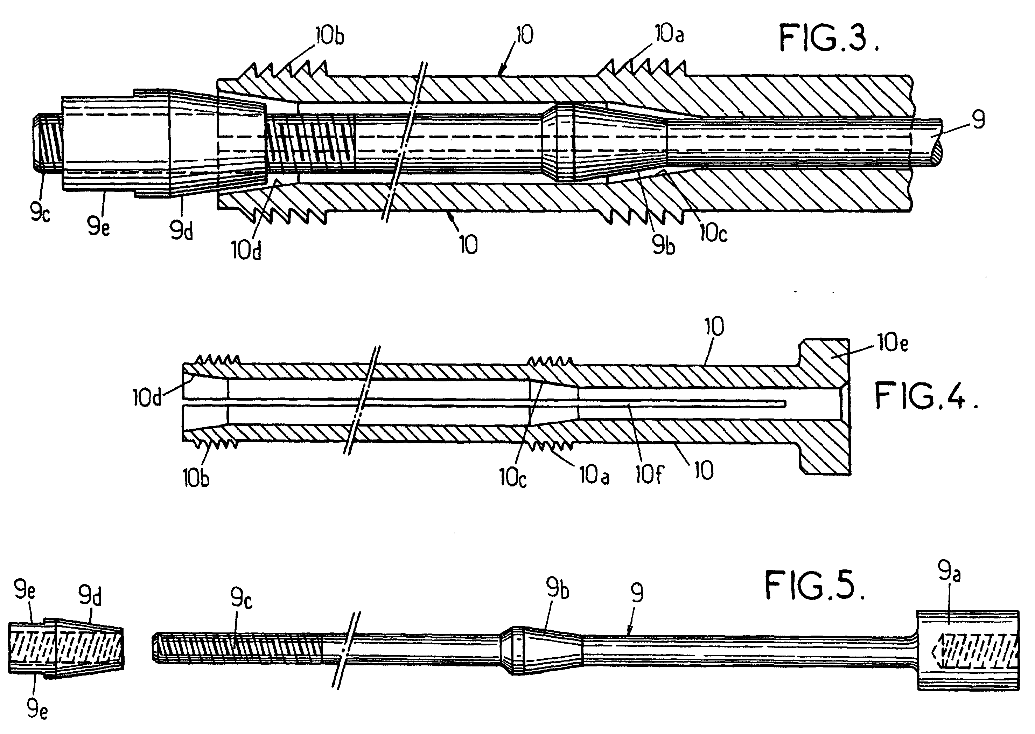

Le tirant 9 et ses deux cônes 9b et 9d est monté à l'intérieur d'un ensemble de quatre griffes 10 élastiquement déformables et déplaçables en expansion sensiblement radiale, par écartement des griffes 10 les unes des autres sous l'effet d'un déplacement axial du tirant 9 et des cônes 9b et 9d de la gauche vers la droite sur les figures 1 et 2, et comme également représenté sur la figure 3, en commandant le déplacement de la tige 8 et du piston 7 d'expansion vers la droite sur les figures 1 et 2, par rapport à la tige 6 et au piston 5.

L'ensemble des quatre griffes 10 est représenté sur la figure 4.

Chacune des quatre griffes 10 présente, en saillie sur sa face externe, deux jeux de dents d'incrustation 10a et 10b qui sont espacés l'un de l'autre d'une distance axiale légèrement supérieure à la distance séparant la plaque interne d'une plaque externe d'une double plaque tubulaire ou alvéolaire d'extrémité d'un échangeur à tubes. Chacune des quatre griffes 10 présente également, sur sa face interne et au niveau des jeux de dents 10a et 10b, deux faces d'appui inclinées dans le même sens 10c et 10d, chacune délimitée sensiblement par un quadrant de surface tronconique, et qui sont destinées à entrer en contact avec les surfaces externes tronconiques respectivement du premier et du second cônes 9b et 9d du tirant central 9, lorsque ce dernier est déplacé axialement vers le corps de vérin 2, pour provoquer l'écartement des griffes 10 les unes des autres. Les quatre griffes 10 sont réalisées en deux demi-pièces fendues chacune axialement en deux moitiés et présentant un épaulement radial 10e, à leur extrémité opposée à celle présentant un jeu de dents 10b d'incrustation autour de la portion de surface tronconique 10d de plus grand diamètre interne.

Comme représenté sur la figure 4, les quatre griffes 10 sont réalisées par deux usinages longitudinaux et diamétraux, dont l'un 10f ne s'étend pas sur toute la longueur d'un manchon qui est surépaissi au niveau de l'épaulement radial externe 10e et qui présente les deux jeux axialement espacés de dents circulaires 10a et 10b en saillie radiale vers l'extérieur sur sa face externe, et un alésage central à deux parties cylindriques alternées avec deux parties tronconiques formant les faces d'appui inclinées 10c et 10d, de sorte que l'alésage central converge en direction de l'épaulement radial 10e.

Comme visible sur la figure 1, l'épaulement 10e des griffes 10 peut venir en appui contre une extrémité axiale d'une entretoise tubulaire 11, en appui par son autre extrémité axiale contre l'extrémité libre 6e de la tige 6. Cette extrémité de tige 6e est extérieurement filetée et fixée par vissage dans un écrou d'extraction 12, qui est un écrou à section longitudinale en U, dans le fond duquel est logé l'épaulement radial 10e des griffes 10, lesquelles traversent un alésage axial dans la base de l'écrou 12.

Cet écrou 12 entoure ainsi l'entretoise 11, l'épaulement radial 10e des griffes 10 ainsi que la partie d'extrémité 6e de la tige 6.

Le dispositif comprend également une butée 13 d'appui du vérin 1, cette butée 13 comprenant une partie tubulaire cylindrique 13a, entourant essentiellement l'écrou 12 et la partie adjacente de la tige 6, et qui est fixée par vissage d'une extrémité sur un embout tubulaire fileté 4a du palier 4, du côté opposé au corps de vérin 2. L'autre extrémité de la partie de butée 13a est vissée sur une tête de butée 13b, de forme générale externe tronconique convergeant du côté opposé à la partie de butée 13a, et se terminant par un embout tubulaire cylindrique d'appui contre la portion annulaire de surface externe qui entoure un alvéole de logement d'un tube d'échangeur dans la plaque externe d'une double plaque d'extrémité de cet échangeur.

Sur la figure 1, on a schématiquement représenté en 14 et 15 les plaques respectivement externe et interne alvéolées d'une double plaque dans laquelle sont insérées des parties d'extrémité d'entrée ou de sortie de tubes 16 de faisceaux d'échangeurs. La partie d'extrémité correspondante de chaque tube 16 est insérée avec étanchéité dans la plaque interne 15 par un dudgeonnage interne 16b et dans la plaque externe 14 par un dudgeonnage externe 16a.

Pour réaliser l'extraction d'une partie d'extrémité d'un tube 16, on procède de la manière suivante : on introduit axialement dans cette partie d'extrémité du tube 16 les parties des griffes 10 en saillie à l'extérieur de la tête de butée 13b ainsi que la partie correspondante du tirant 9 et les deux cônes 9b et 9d, en position de repos, c'est-à-dire n'exerçant aucun effort d'écartement sur les griffes 10, et on dispose la tête de butée 13b en appui contre la face externe de la plaque externe 14, autour de l'alvéole logeant le tube 16 à extraire, comme représenté sur la figure 1.

En position initiale du vérin 1, le piston 5 est rappelé en appui contre le palier 4, en position de sortie maximum de la tige 6 hors du corps 2, et le piston 7 est rappelé en appui contre le piston 5 au fond de l'alésage axial 5d de ce dernier, sous l'effet d'une contre-pression exercée en permanence dans la chambre 17 délimitée à l'arrière du corps 2, dans ce dernier et entre les deux vérins 5 et 7 d'une part, et le fond 3 d'autre part. Cette chambre 7 est en permanence alimentée par une contre-pression pneumatique admise par l'orifice de contre-pression 18 dans le cylindre 2, à proximité du fond 3, et en communication permanente avec une source de pression pneumatique par une conduite 19.

Pour assurer l'extraction du tube 16 en une seule opération, sans risque de rupture du tube 16 entre ses deux dudgeonnages 16a et 16b et sans occasionner de dommage aux plaques 14 et 15, le vérin télescopique 1 à deux étages est commandé par une unique alimentation hydraulique à une pression très supérieure à la pression pneumatique de rappel de la chambre 17, cette pression hydraulique venant d'un groupe (non représenté) comprenant une pompe hydraulique et un distributeur à une voie à commande par une électrovanne basse tension, dont le fonctionnement est commandé par un bouton-poussoir relié au coffret de commande du groupe hydraulique.

Cette unique pression hydraulique de commande est fournie au vérin par une canalisation 20 raccordée au corps 2 en regard d'un orifice 21 percé dans le corps 2 à proximité du palier 4 et débouchant dans une gorge délimitant une première surface annulaire 22 autour du piston 5. Des perçages radiaux 23 dans le piston 5 mettent cette gorge périphérique en communication avec le passage central 6d de la tige 6, autour de la seconde tige 8, de sorte que la pression hydraulique admise dans le corps 2 par l'orifice 21 et appliquée sur la première surface annulaire 22 du piston 5 est également admise dans la chambre 24 délimitée entre les pistons 5 et 7 et s'applique sur la surface annulaire du piston 7 de sorte à déplacer ce dernier dans le piston 5, vers la rondelle 5c formant fin de course d'expansion, limitant la course du piston 7, en rétractant la tige 8 vers l'intérieur du vérin 1. Ce déplacement axial du vérin 7 et de la tige 8 est transmis au tirant 9, dont les cônes 9b et 9d viennent en appui sur les surfaces inclinées 10c et 10d des griffes 10 et transmettent ainsi un effort d'écartement à ces griffes 10, qui ne peuvent se déplacer axialement, car elles prennent appui par leur épaulement radial externe 10e contre l'entretoise 11, lors de l'action d'expansion des griffes 10. En s'écartant, les griffes 10 incrustent leurs dents 10a et 10b dans les dudgeonnages respectivement externe 16a et interne 16b du tube 16, de sorte qu'on réalise un ancrage des griffes 10 simultanément dans les deux dudgeonnages 10a et 10b par la première étape de la séquence de fonctionnement du vérin, qui correspond à un déplacement du piston 7 et de la tige 8 d'expansion par rapport au piston 5 et à la tige 6 ainsi qu'au corps 2, pour commander l'expansion des griffes 10.

Dans la seconde étape de la séquence de fonctionnement, lorsque la pression hydraulique admise dans le corps de vérin 2 et appliquée sur la première surface annulaire 22 du piston 5 est suffisante pour déplacer ce piston 5 et donc la tige 6 vers le fond 3 du vérin, en entraînant l'écrou de liaison 12 et donc les griffes 10 que l'écrou 12 entraîne par leur épaulement 10e, l'arrachement du tube 16 simultanément au niveau des deux dudgeonnages 16a et 16b est provoqué, ce qui déclenche le mouvement d'extraction de la partie d'extrémité correspondante du tube 16 vers l'extérieur de la double plaque 14-15. La réaction à ce mouvement d'arrachement est appliquée sur la face externe de la plaque externe alvéolée 14 par la butée 13 vissée sur le palier 4 solidaire du corps de vérin 2, la butée 13 prenant appui par sa tête de butée 13b sur le pourtour de l'alvéole correspondante de la plaque externe 14.

Immédiatement après le début de la course du piston 5 dans le corps de vérin 2, la nervure annulaire 25, par laquelle la face avant du piston 5 vient en appui contre le palier 4, est écartée du palier 4, de sorte que la pression hydraulique peut s'appliquer sur une seconde surface annulaire 26 du piston 5, à l'intérieur de la nervure 25. De plus, dès le début de l'arrachement du tube 16 et l'entraînement des dudgeonnages 16a et 16b par la course de la tige 6 et du piston 5 d'extraction dans le corps de vérin 2, la pression hydraulique d'alimentation commune aux deux étages du vérin diminue de façon importante, ce qui réduit également l'effort d'extraction et l'effort d'expansion. De ce fait, les griffes 10 sollicitées en expansion n'augmentent pas les dimensions transversales du tube 16, en particulier au niveau de son dudgeonnage interne 16b, lorsque ce dudgeonnage 16b se trouve dans l'espace entre les deux plaques 15 et 14, et le dudgeonnage interne 16b peut passer facilement au travers de la plaque externe 14 au fur et à mesure que la course d'extraction est poursuivie.

La traction simultanée sur les deux dudgeonnages 16a et 16b fait que le tube 16 ne se casse pas entre les deux plaques 14 et 15, et que ce procédé d'extraction n'entraîne aucune déformation radiale du tube 16 ni de déformation de la géométrie des alvéoles des plaques 14 et 15, même lorsque l'une au moins de ces plaques est en un alliage fragile. Ces avantages résultent du fait que l'unique pression hydraulique d'alimentation du vérin télescopique est une pression qui s'adapte automatiquement à la résistance opposée, comme expliqué ci-dessus.

## Revendications

1. Dispositif d'extraction de tubes (16) d'un échangeur thermique à faisceau de tubes dont chacun est inséré, à chacune de ses deux parties d'extrémité axiales, par un double dudgeonnage (16a, 16b) dans une double plaque, à plaque externe (14) et plaque interne (15) espacées l'une de l'autre, à une extrémité correspondante de l'échangeur, le dispositif comprenant :
- au moins une griffe (10), destinée à être engagée dans une partie d'extrémité de tube (16), et munie de moyens (10a, 10b) d'inorustation dans le tube (16) aux niveaux des deux dudgeonnages correspondants (16a, 16b),
- au moins un tirant (9) d'expansion sensiblement radiale des griffes (10), ledit tirant étant également destiné à être engagé dans ladite partie d'extrémité du tube (16) et déplacé dans le tube (16) de sorte à entraîner chaque griffe (10) en position d'incrustation desdits moyens d'incrustation (10a, 10b) dans le tube (16),
- un vérin hydraulique télescopique (1) à au moins deux étages, dont chaque étage comporte un piston (5, 7) et une tige (6, 8), qui coulissent avec étanchéité dans un corps de vérin (2) relié à une butée (13) d'appui contre la plaque externe (14) de ladite double plaque, un premier étage du vérin étant un étage d'expansion, dont la tige (8) est reliée audit tirant (9) d'expansion de chaque griffe (10), et un second étage du vérin étant un étage d'extraction, dont la tige (6) est reliée à chaque griffe (10), le piston (7) et la tige (8) d'expansion coulissant avec étanchéité respectivement dans le piston (5) et la tige (6) d'extraction coulissant à leur tour avec étanchéité respectivement dans le corps de vérin (2) et en traversant un palier (4) de fermeture de l'extrémité du corps de vérin (2) qui est tournée vers la butée (13) d'appui sur la plaque externe (14), **caractérisé en ce que** les étages d'expansion et d'extraction du vérin (1) sont alimentés simultanément à la même pression hydraulique, et **en ce que** les pistons d'expansion (7) et d'extraction (5) présentent des surfaces efficaces telles que la tige (6) et le piston (5) d'extraction ne commencent leur course et n'entraînent ladite partie d'extrémité du tube (16) vers l'extérieur de la double plaque (14-15) qu'après que la tige (8) et le piston (7) d'expansion ont commencé leur course et entraîné ledit tirant d'expansion (9) en position d'incrustation de chaque griffe (10) dans le double dudgeonnage (16a, 16b), et **en ce qu'**après le début de la course du piston d'extraction (5) dans le corps de vérin (2), la pression hydraulique d'alimentation commune aux deux étages du vérin (1) diminue, et donc aussi les efforts d'expansion et d'extraction.

2. Dispositif selon la revendication 1, **caractérisé en ce que** le piston d'expansion (7) est alimenté en pression hydraulique par au moins un canal (23) sensiblement radial dans le piston d'extraction (5), entre une gorge périphérique délimitant une première surface annulaire (22) sur le piston d'extraction (5), et un jeu radial entre les deux tiges (6, 8) et en communication avec une chambre (24) délimitée entre les deux pistons (5, 7), le piston d'extraction (5) présentant également une seconde surface annulaire (26) séparée par une nervure annulaire (25) de la première surface annulaire (22), et soumise à la pression hydraulique d'extraction du tube (16) après le début de la course d'extraction du piston d'extraction (5) sous l'effet de la pression hydraulique appliquée à la première surface annulaire (22).

3. Dispositif selon l'une des revendications 1 et 2, **caractérisé en ce que** le vérin (1) comporte une chambre de contre-pression (17), délimitée entre les deux pistons (5, 7) et l'extrémité fermée (3) du corps de vérin (2) du côté opposé à ladite butée d'appui (13), ladite chambre de contre-pression (17) étant maintenue en permanence à une contre-pression pneumatique de rappel des pistons (5, 7), qui est inférieure à la pression hydraulique d'alimentation du vérin (1).

4. Dispositif selon l'une quelconque des revendications 1 à 3, **caractérisé en ce qu'**il comprend plusieurs griffes (10) disposées autour d'un tirant axial (9), chaque griffe (10) comportant deux séries de dents (10a, 10b) décalées axialement sur sa face externe et deux surfaces d'appui (10c, 10d) inclinées sur sa face interne, de sorte que les griffes (10) sont écartées sensiblement radialement les unes des autres sous la poussée axiale de deux cônes (9b, 9d) d'expansion à surfaces externes inclinées, de préférence sensiblement tronconiques dans le même sens, contre les deux surfaces d'appui (10c, 10d) des griffes (10), les deux cônes d'expansion (9b, 9d) étant portés par le tirant axial (9) fixé par une extrémité (9a) à l'extrémité (8d) de la tige d'expansion (8) du côté opposé au piston d'expansion (7).

5. Dispositif selon la revendication 4, **caractérisé en ce que** les deux cônes d'expansion (9b, 9d) sont séparés l'un de l'autre par une distance réglable axialement, de préférence par vissage du cône d'expansion (9d) le plus éloigné de la tige d'expansion (8) sur une partie d'extrémité filetée (9c) du tirant (9).

6. Dispositif selon l'une des revendications 4 et 5, **caractérisé en ce que** les griffes (10) sont entraînées dans le sens de l'extraction du tube (16) par un écrou (12) qui est vissé sur la partie d'extrémité (6e) de la tige d'extraction (6) qui fait saillie à l'extérieur du corps de vérin (2).

7. Dispositif selon la revendication 6, **caractérisé en ce que** les griffes (10) présentent un épaulement radial externe (10e) entraîné dans le sens de l'extraction du tube (16) par le fond de l'écrou (12) ayant une section longitudinale en U.

8. Dispositif selon l'une quelconque des revendications 4 à 7, **caractérisé en ce que** la liaison entre le tirant (9) et la tige d'expansion (8) est disposée à l'intérieur d'une entretoise tubulaire (11) s'étendant entre l'extrémité (6e) de la tige d'extraction (6) qui est reliée aux griffes (10), et ces dernières, pour servir d'appui aux griffes (10) et empêcher leur recul lors de leur expansion.

9. Dispositif selon l'une quelconque des revendications 1 à 8, **caractérisé en ce que** ladite butée d'appui (13) du corps de vérin (2) contre la plaque externe (14) comprend une partie cylindrique (13a) fixée par une extrémité sur le palier (4), du côté opposé au corps de vérin (2), et prolongée à son autre extrémité par un embout (13b) de forme générale externe tronconique pour l'appui autour d'un alvéole de ladite plaque externe (14) et logeant le tube (16) à extraire.

## Patentansprüche

1. Vorrichtung zum Herausziehen von Rohren (16) eines Wärmetauschers mit einem Bündel von Rohren, deren jedes an jedem seiner beiden axialen Endteile durch eine doppelte Aufweitung (16a, 16b) in eine doppelte Platte mit Außenplatte (14) und Innenplatte (15) eingesetzt ist, die an einem entsprechenden Ende des Wärmetauschers voneinander entfernt sind, wobei die Vorrichtung folgendes umfaßt
- mindestens eine Klaue (10) die dazu bestimmt ist, in einen Endteil des Rohrs (16) eingeführt zu werden, und mit Mitteln (10a, 10b) zum Eindrücken in das Rohr (16) auf Höhe der beiden entsprechenden Aufweitungen (16a, 16b) versehen ist,
- mindestens eine Zugstange (9) zur im wesentlichen radialen Expansion der Klauen (10) die auch dazu bestimmt ist, in den Endteil des Rohrs (16) eingeführt und in dem Rohr (16) so bewegt zu werden, daß jede Klaue (10) in die Stellung des Eindrückens der Eindrückmittel (10a, 10b) in das Rohr (16) mitgenommen wird,
- einen teleskopischen Hydraulikzylinder (1) mit mindestens zwei Stufen, deren jede einen Kolben (5, 7) und eine Stange (6, 8) aufweist, die in einem Zylinderkörper (2) dicht gleiten, der mit einem Anschlag (13) zur Auflage auf der Außenplatte (14) der doppelten Platte verbunden ist, wobei eine erste Stufe des Zylinders eine Expansionsstufe ist, deren Stange (8) mit der Zugstange (9) zur Expansion jeder Klaue (10) verbunden ist, und eine zweite Stufe des Zylinders eine Extraktionsstufe ist, deren Stange (6) mit jeder Klaue (10) verbunden ist, wobei der Expansionskolben (7) und die Expansionsstange (8) jeweils in dem Extraktionskolben (5) und in der Extraktionsstange (6) dicht gleiten die ihrerseits jeweils in dem Zylinderkörper (2) und bei Durchquerung eines Lagers (4) zum Verschließen des dem Anschlag (13) zur Auflage auf der Außenplatte (14) zugewandten Endes des Zylinderkörpers (2) dicht gleiten, **dadurch gekennzeichnet, daß** die Expansionsund Extraktionsstufen des Zylinders (1) gleichzeitig mit demselben Hydraulikdruck versorgt werden und daß der Expansionskolben (7) und der Extraktionskolben (5) solche Wirkflächen besitzen, daß die Extraktionsstange (6) und der Extraktionskolben (5) ihren Hub erst beginnen und diesen Endteil des Rohrs (16) bezüglich der doppelten Platte (14-15) nach außen mitnehmen, nachdem die Expansionsstange (8) und der Expansionskolben (7) ihren Hub begonnen haben und die Expansionszugstange (9) in die Stellung des Eindrückens jeder Klaue (10) in die doppelte Aufweitung (16a, 16b) mitgenommen haben, und daß nach Beginn des Hubs des Extraktionskolbens (5) im Zylinderkörper (2) der beiden Stufen des Zylinders (1) gemeinsame hydraulische Versorgungsdruck abnimmt und damit auch die Expansions- und Extraktionskräfte.

2. Vorrichtung nach Anspruch 1, **dadurch gekennzeichnet, daß** der Expansionskolben (7) mit Hydraulikdruck durch mindestens einen im wesentlichen radialen Kanal (23) versorgt wird, der in dem Extraktionskolben (5) zwischen einer Umfangsnut, die eine erste ringförmige Fläche (22) auf dem Extraktionskolben (5) abgrenzt, und einem radialen Spiel zwischen den beiden Stangen (6, 8), das mit einer zwischen den beiden Kolben (5, 7) abgegrenzten Kammer (24) in Verbindung ist, vorgesehen ist, wobei der Extraktionskolben (5) ferner eine zweite ringförmige Fläche (26) aufweist, die durch eine ringförmige Rippe (25) von der ersten ringförmigen Fläche (22) getrennt ist und dem hydraulischen Druck der Extraktion des Rohrs (16) nach dem Anfang des Extraktionshubs des Extraktionskolbens (5) unter der Wirkung des an die erste ringförmige Fläche (22) angelegten hydraulischen Drucks ausgesetzt ist.

3. Vorrichtung nach einem der Ansprüche 1 und 2, **dadurch gekennzeichnet, daß** der Zylinder (1) eine Gegendruckkammer (17) aufweist, die zwischen den beiden Kolben (5, 7) und dem geschlossenen Ende (3) des Zylinderkörpers (2) auf der dem Auflageanschlag (13) entgegengesetzten Seite abgegrenzt ist, wobei diese Gegendruckkammer (17) ständig auf einem pneumatischen Gegendruck zur Zurückholung der Kolben (5, 7) gehalten wird, der kleiner als der hydraulische Versorgungsdruck des Zylinders (1) ist.

4. Vorrichtung nach einem der Ansprüche 1 bis 3, **dadurch gekennzeichnet, daß** sie mehrere Klauen (10) aufweist, die um eine axiale Zugstange (9) herum angeordnet sind, wobei jede Klaue (10) zwei Reihen von Zähnen (10a, 10b), die axial auf ihrer Außenfläche versetzt sind, und zwei geneigte Auflageflächen (10c, 10d) auf ihrer Innenseite aufweist, so daß die Klauen (10) unter dem axialen Schub von zwei Expansionskegeln (9b, 9d) mit geneigten Außenflächen, die vorzugsweise im wesentlichen in der selben Richtung kegelstumpfförmig sind, gegen die beiden Auflageflächen (10c, 10d) der Klauen (10) im wesentlichen radial voneinander entfernt werden, wobei die beiden Expansionskegel (9b, 9d) von der axialen Zugstange (9) getragen werden, die mit einem Ende (9a) an dem Ende (8d) der Expansionsstange (8) auf der dem Expansionskolben (7) entgegengesetzten Seite befestigt ist.

5. Vorrichtung nach Anspruch 4, **dadurch gekennzeichnet, daß** die beiden Expansionskegel (9b, 9d) voneinander in einem axial verstellbaren Abstand angeordnet sind, und zwar vorzugsweise durch Verschraubung des von der Expansionsstange (8) am weitesten entfernten Expansionskegels (9d) auf einem mit Gewinde versehenen Endteil (9c) der Zugstange (9).

6. Vorrichtung nach einem der Ansprüche 4 und 5, **dadurch gekennzeichnet, daß** die Klauen (10) in der Richtung der Extraktion des Rohrs (16) durch eine Mutter (12) mitgenommen werden, die auf den Endteil (6e) der Extraktionsstange (6) aufgeschraubt ist, der aus dem Zylinderkörper (2) herausragt.

7. Vorrichtung nach Anspruch 6, **dadurch gekennzeichnet, daß** die Klauen (10) eine radiale Außenschulter (10e) aufweisen, die in der Richtung der Extraktion des Rohrs (16) durch den Boden der Mutter (12), die einen U-förmigen Längsschnitt besitzt, mitgenommen wird.

8. Vorrichtung nach einem der Ansprüche 4 bis 7, **dadurch gekennzeichnet, daß** die Verbindung zwischen der Zugstange (9) und der Expansionsstange (8) im Inneren eines Distanzrohrs (11) angeordnet ist, das sich zwischen dem mit den Klauen (10) verbundenen Ende (6e) der Extraktionsstange (6) und diesen Klauen (10) erstreckt, um als Anlage für die Klauen zu dienen und ihre Rückbewegung bei ihrer Expansion zu verhindern.

9. Vorrichtung nach einem der Ansprüche 1 bis 8, **dadurch gekennzeichnet, daß** der Anschlag (13) zur Auflage des Zylinderkörpers (2) an der Außenplatte (14) einen zylindrischen Teil (13a) umfaßt, der mit einem Ende an dem Lager (4) auf der dem Zylinderkörper (2) entgegengesetzten Seite befestigt ist und an seinem anderen Ende durch einen Ansatz (13b) von allgemeiner kegelstumpfförmiger Außenform für die Auflage um eine das zu extrahierende Rohr (15) aufnehmende Kammer der Außenplatte (14) herum verlängert ist.

## Claims

1. Device for removing tubes (16) from a heat exchanger that is fitted with a bundle of tubes being each inserted, at each of their both axial end portions, through a double expansion (16a, 16b) in a dual plate, having a pair of spaced apart outer and inner plates (14, 15), into an associated exchanger end, the device including:
- at least one claw (10), being adapted to be engaged into a tube (16) end portion and provided with means (10a, 10b) for sticking them into the tube (16) at the two associated expansions (16a, 16b),
- at least one tie rod (9) for substantially radially expanding the claws (10), said tie rod being also adapted to be engaged into said tube (16) end portion and moved within said tube (16) so as to drive each claw (10) into the sticking position of said sticking means (10a, 10b) within the tube (16),
- a telescopic hydraulic cylinder (1) provided with at least two stages, each stage comprising a piston (5, 7) and a rod (6, 8) that sealingly slide within a cylinder body (2) that is connected to a thrust bearing (13) pushing against the outer plate (14) of said dual plate, a first cylinder stage being an expansion stage the rod (8) of which is linked to the expansion tie rod (9) of each claw (10), and a second cylinder stage being a removal stage the rod (6) of which is linked to each claw (10), the expansion piston (7) and rod (8) respectively sealing sliding within the removal piston (5) and rod (6) in turn sealing sliding respectivement within the cylinder body (2) and through a bearing (4) that closes the end of the cylinder body (2) directed to the thrust bearing (13) pushing against the outer plate (4), **characterized in that** the expansion and removal stages of the cylinder (1) are simultaneously supplied with the same hydraulic pressure, and **in that** the expansion and removal pistons (7, 5) exhibit such efficient surfaces that the removal rod (6) and piston (5) only start their strokes and drive said end portion of the tube (16) outside the dual plate (14-15) after the expansion rod (8) and piston (7) have started their strokes and driven said expansion tie rod (9) into the sticking position of each claw (10) in the double expansion (16a, 16b), and **in that** after the beginning of the removal piston (5) stroke within the cylinder body (2), the hydraulic pressure supplied in common to both cylinder (1) stages decreases, thus as well as the expansion and removal forces.

2. Device according to Claim 1, **characterized in that** the expansion piston (7) is supplied with hydraulic pressure through at least one substantially radial channel (23) in the removal piston (5), between a peripheral groove delineating a first annular surface (22) on the removal piston (5), and a radial clearance between the couple of rods (6, 8) and communicating with a chamber (24) as defined between the couple of pistons (5, 7), the removal piston (5) also exhibiting a second annular surface (26) that is separated by an annular rib (25) from the first annular surface (22) and is subjected to the tube (16) removal hydraulic pressure after the beginning of the removal stroke of the removal piston (15) under the action of the hydraulic pressure that is applied to the first annular surface (22).

3. Device according to any one of Claims 1 and 2, **characterized in that** the cylinder (1) has a back pressure chamber (17) being defined between the couple of pistons (5, 7) and the closed end (3) of the cylinder body (2) on the opposite side to said thrust bearing, said back pressure chamber (17) being permanently kept at a piston (5, 7) return pneumatic back pressure lower than the cylinder (1) supply hydraulic pressure.

4. Device according to any one of Claims 1 to 3, **characterized in that** it includes a plurality of claws (10) arranged about an axial tie rod (9), each claw (10) being provided with two sets of axially offset teeth (10a, 10b) on its outer face and two angled bearing surfaces (10c, 10d) on its inner face, such that the claws are moved substantially radially apart from each other under the axial thrust exerted by two expansion cones (9b, 9d) having angled outer surfaces, preferentially substantially tapered in the same direction, against both bearing surfaces (10c, 10d) of the claws (10), both expansion cones (9b, 9d) being carried by the axial tie rod (9) secured by an end (9a) to the end (8d) of the expansion rod (8) on the opposite side to the expansion piston (7).

5. Device according to Claim 4, **characterized in that** the two expansion cones (9b, 9d) are separated from each other by an axially adjustable distance, preferentially by screwing the more distant expansion cone (9d) from the expansion rod (8) onto a threaded end portion (9c) of the tie rod (9).

6. Device according to any of Claims 4 and 5, **characterized in that** the claws (10) are driven in the tube (16) removal direction by a nut (12) that is screwed onto the removal rod (6) end portion (6e) protruding out of the cylinder body (2).

7. Device according to Claim 6, **characterized in that** the claws (10) have an outer radial shoulder (10e) that is driven in the tube (16) removal direction by the bottom of the nut (12) with a U-shaped longitudinal section.

8. Device according to any of Claims 4 to 7, **characterized in that** the link between the tie rod (9) and the expansion rod (8) is placed within a tubular spacer (11) extending between the end (6e) of the removal rod (6) being linked to the claws (10), and the latter ones, so as to provide a bearing surface to the claws (10) and to prevent them from moving backwards upon their expansion.

9. Device according to any of Claims 1 to 8, **characterized in that** said cylinder body (2) thrust bearing (13) resting against the outer plate (14) comprises a cylindrical portion (13a) that is secured by one end on the bearing (4), on the opposite side to the cylinder body (2), and extended at its other end by an externally globally tapered end-piece (13b) arranged for bearing against a cell in said outer plate (14) and accommodating the tube (16) to be removed.
